# EUROPÄISCHE PATENTANMELDUNG

(11) **EP 2 088 385 A2**
(43) Veröffentlichungstag der Anmeldung: **12.08.2009**
(21) Anmeldenummer: 09001889.6
(22) Anmeldetag: 11.02.2009
(51) Int. Cl.: F24J 2/46, F24J 2/52

(54) **Sonnenkollektorwanne**

(30) Priorität: 11.02.2008 AT 2152008
(71) Anmelder: Greiner Perfoam GmbH, 4550 Kremsmünster (AT)
(72) Erfinder: Riepl, Roland, Ing., 4400 Steyr (AT)
(74) Vertreter: Ofner, Clemens

(57) **Zusammenfassung**

Die Erfindung betrifft eine Sonnenkollektorwanne (2) mit einem Wannenkörper, der einen Boden (5) und daran angeordnete Seitenwände (6) aufweist, wobei der Wannenkörper eine Schicht aus einem mit Fasern (13) verstärkten Polyurethan umfasst.

## Beschreibung

Die Erfindung betrifft eine Sonnenkollektorwanne mit einem Wannenkörper, der einen Boden und daran angeordnete Seitenwände aufweist, wobei der Wannenkörper eine Schicht aus einem, mit Fasern verstärkten Kunststoff umfasst, sowie einen Sonnenkollektor mit einer Sonnenkollektorwanne, zumindest einem darin angeordneten Absorber, sowie mit einer transparenten Abdeckung der Sonnenkollektorwanne.

Zur Reduktion des Gewichts von Sonnenkollektoren ist in der DE 195 28 361 C1 bzw. der De 295 12 451 U1 ein Ultraleicht-Solar-Wärmekollektor vorgeschlagen, der eine Kollektorwanne auf Basis einer tiefgezogenen thermoplastischen Kunststoffschale aufweist. Diese Wanne kann beispielsweise aus ABS oder ähnlichen, tiefziehfähigen Thermoplasten gebildet werden. Aufgrund der entstehenden Hitze im Kollektor wird auf dem Boden der Wanne eine strahlenreflektierende Hitzeschutzfolie auf Basis von Aluminium und kaschiert gegen Glasseide befestigt.

In der DE 103 38 483 A1 ist allgemein erwähnt, dass Gehäuse von Sonnenkollektoren aus glasverstärkten Kunststoffen hergestellt werden können.

Aufgabe vorliegender Erfindung ist es, einen Sonnenkollektor zur Verfügung zu stellen, der einfacher aufgebaut ist.

Diese Aufgabe der Erfindung wird durch die eingangs genannte Sonnenkollektorwanne gelöst, bei der als Kunststoff für den Wannenkörper ein Polyurethan verwendet wird bzw. durch den Sonnenkollektor der diese Sonnenkollektorwanne aufweist. Überraschenderweise wurde bei Prüfungen festgestellt, dass das faserverstärkte Polyurethan bis zu einer Temperatur von zumindest annähernd 150° C langzeitig und bis zu einer Temperatur von zumindest annähernd 200 °C (übliche Stillstandstemperatur eines Sonnenkollektors) kurzzeitig sowohl mechanisch als auch thermisch stabil ist. Da Temperaturen über 200°C bei Sonnenkollektoren über einen längeren Zeitraum praktisch nicht auftreten, ist es daher nicht erforderlich, wie im Stand der Technik gezeigt, zwischen dem Absorber und der Kollektorwanne zusätzliche Hitzeschutzmaßnahmen, wie eine strahlenreflektierende Hitzeschutzfolie auf Basis von Aluminium kaschiert gegen Glasseide, vorzusehen, wodurch der Aufbau des Sonnenkollektors deutlich vereinfacht wird und damit auch ein entsprechender Kostenvorteil realisiert werden kann. Es muss also nicht auf teure thermoplastische Materialien, wie z.B. Polyetheretherketone, von denen bekannt ist, dass sie bis zu sehr hohe Temperaturen stabil sind, zurückgegriffen werden. Darüber hinaus ist Polyurethan ein Werkstoff, der bereits eine breite Anwendung in der Technik findet und somit produktionstechnisch sehr gut beherrschbar ist. Zudem lässt sich Polyurethan einfach mit oder ohne Schaumstruktur herstellen, sodass je nach Bedarf ggfs. eine weitere Gewichtsreduzierung möglich ist, und somit die fertigen Sonnenkollektoren nicht nur einfacher transportierbar sind, insbesondere am Dach handhabbar, sondern aufgrund des geringeren Gewichtes ggfs. auch der Unterbau des Daches einfacher ausgeführt werden kann. Im Falle einer mechanischen Beschädigung der Kollektorwanne ist aufgrund des verwendeten Materials auch eine rasche und einfache Reparatur möglich.

Zumindest der Boden des Wannenkörpers, vorzugsweise auch dessen Seitenwände, kann bzw. können mehrschichtig ausgebildet sein, wobei zumindest eine Kernschicht durch eine Wabenplatte gebildet ist. Es wird damit eine weitere Gewichtsreduzierung realisiert, ohne dass die mechanischen Eigenschaften der Kollektorwanne darunter leiden. Zudem kann damit auch der Anteil des Kunststoffes an der Kollektorwanne reduziert werden, wodurch wiederum eine entsprechender Kostenvorteil realisierbar ist. Darüber hinaus dient dieser Wabenkern auch der thermischen Isolation durch die darin ausgebildeten Hohlräume, wodurch der Wirkungsgrad des Sonnenkollektors verbessert bzw. zusätzliches Isoliermaterial eingespart werden kann.

Es ist dabei möglich, dass die Schicht aus dem faserverstärkten Polyurethan zumindest teilweise in die Waben hineinragt, wodurch die mechanische Festigkeit, insbesondere die Verbundfestigkeit, durch eine Art "Verkrallungseffekt" verbessert werden kann, sodass eine "Delamination" bei auftretenden hohen Temperaturen besser verhindert werden kann.

Bevorzugt werden Fasern verwendet, die ausgewählt sind aus einer Gruppe umfassend Glasfasern, Mineralfasern, Kohlenstofffasern, Aramidfasern und Keramikfasern. Durch diese Fasern wird der Sonnenkollektorwanne eine bessere Formhaltigkeit verliehen. Darüber hinaus kann damit auch die Temperaturbeständigkeit der Sonnenkollektorwanne erhöht werden. Teilweise ist mit diesem Fasern auch aufgrund der geringen Wärmeleitfähigkeit eine Verbesserung des Wirkungsgrades dieses Sonnenkollektors, d. h. eine höhere Ausbeute an Wärmeenergie, erzielbar.

Die Fasern können mit einer Länge eingesetzt werden, die ausgewählt ist aus einem Bereich mit einer unteren Grenze von 25 mm und einer oberen Grenze von 100 mm, wodurch eine Anisotropie der Eigenschaften der Sonnenkollektorwanne, insbesondere der Steifigkeit, erreicht werden kann. Es kann mit dieser Länge der Fasern eine Schichtung derselben im Polyurethan erzielt werden, die entsprechend positive Auswirkungen auf die mechanischen Eigenschaften hat. Insbesondere kann damit das Biegeverhalten der Sonnenkollektorwanne, nachdem diese Fasern zumindest annähernd parallel zur Ebene des Bodens der Sonnenkollektorwanne ausgerichtet sein können, verbessert werden.

Gemäß weiterer Ausführungsvarianten hierzu ist es möglich, dass Fasern verwendet werden mit einer Länge, die ausgewählt ist aus einem Bereich mit einer unteren Grenze von 55 mm und einer oberen Grenze von 90 mm bzw. mit einer unteren Grenze von 60 mm und einer oberen Grenze von 70 mm, wodurch die Eigenschaften der Sonnenkollektorwanne durch eine gleichmäßige Verteilung der Fasern vergleichmässigt werden können.

Es ist weiters möglich, dass der Anteil der Fasern an dem faserverstärkten Polyurethan ausgewählt wird aus einem Bereich mit einer unteren Grenze von 3 Gew.-% und einer oberen Grenze von 60 Gew.-%. Unterhalb von 3 Gew.-% konnte festgestellt werden, dass die Sonnenkollektorwanne nicht die erforderliche mechanische Stabilität aufweist, insbesondere auch bei starker Wärmebelastung des Sonnenkollektors es ggf. zu einem Erweichen der Kollektorwanne kommt. Mit einem Anteil von mehr 60 Gew.-% ist zu wenig Matrix bildendes Polyurethan vorhanden, sodass die Strukturfestigkeit des Faser-Polyurethan-Verbundes verringert ist. Innerhalb dieses Bereiches kann mit einem entsprechenden Anteil auch eine entsprechende Variabilität der mechanischen Eigenschaften der Sonnenkollektorwanne erreicht werden, sodass die Sonnenkollektorwanne gezielt an die spätere mechanische Beanspruchung angepasst werden kann.

Es ist dabei auch möglich, dass der Anteil an Fasern am Gemisch ausgewählt wird aus einem Bereich mit einer unteren Grenze von 5 Gew.-% und einer oberen Grenze von 30 Gew.-% bzw. aus einem Bereich mit einer unteren Grenze von 5 Gew.-% und einer oberen Grenze von 10 Gew.-%. Es kann damit eine "Nestbildung" von Fasern innerhalb der Sonnenkollektorwanne besser vermieden werden, sodass die Sonnenkollektorwanne gleichmäßigere Eigenschaften aufweist.

Zum besseren Verständnis der Erfindung wird diese anhand der nachfolgenden Figuren näher erläutert.

### Es zeigen jeweils in stark schematisch vereinfachter Darstellung:

- Fig. 1: einen Sonnenkollektor in Stirnansicht geschnitten;
- Fig. 2: eine Ausführungsvariante einer Sonnenkollektorwanne in Schrägansicht geschnitten;
- Fig. 3: eine andere Ausführungsvariante einer Sonnenkollektorwanne in Stirnansicht geschnitten;
- Fig. 4: einen möglichen Verfahrensablauf zur Herstellung der Sonnenkollektorwanne.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

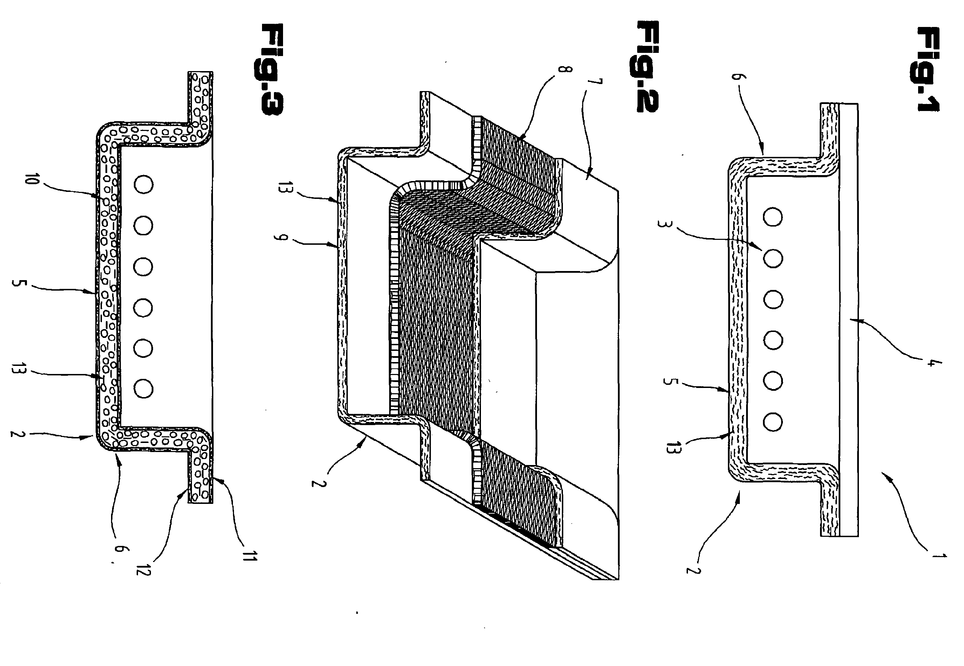

Fig. 1 zeigt einen Sonnenkollektor 1 in Stirnansicht geschnitten. Dieser Sonnenkollektor 1 umfasst eine Sonnenkollektorwanne 2, einen Absorber 3, sowie eine Abdeckung 4.

Der Absorber 3 sowie die Abdeckung 4 können dem Stand der Technik entsprechend ausgebildet sein, bspw. in Form von Kupferrohren bzw. Kunststoffrohren oder dgl. für den Absorber 3 und in Form Glasplatten oder transparenten Kunststoffplatten, insbesondere Polycarbonatplatten, für die Abdeckung 4. Es sei diesbezüglich an die einschlägige Literatur verwiesen.

Des Weiteren kann die Sonnenkollektorwanne eine Wärmedämmung aufweisen, wie dies ebenfalls bereist aus dem Stand der Technik bekannt ist, insbesondere im Bereich des Bodens 5 und oder zumindest einer der Seitenwände 6.

Die Sonnenkollektorwanne 2 umfasst einen Wannenkörper mit einem Boden 5 sowie Seitenwänden 6.

Obwohl nicht dargestellt, besteht selbstverständlich die Möglichkeit, dass im Boden 5 und/oder in den Seitenwänden 6 Durchbrüche bzw. Ausnehmungen vorhanden sind, bspw. für die Durchführung der Absorberrohre. Ebenso besteht die Möglichkeit, dass für diesen Zweck Anschlussstutzen im Boden 5 und/oder an den Seitenwänden 6 vorhanden sind. Diese Durchbrüche bzw. Auslässe können dabei nachträglich, d.h. nach Herstellung der Sonnenkollektorwanne 2, hergestellt werden bzw. besteht die Möglichkeit, diese bei geeigneter Wahl des Werkzeuges bereits während der Formgebung der Sonnenkollektorwanne 2 auszuformen.

Fig. 2 zeigt eine andere Ausführungsvariante der Sonnenkollektorwanne 2. Dabei ist diese Sonnenkollektorwanne 2 als Verbundmaterial gefertigt, bestehend aus einer ersten oberen Deckschicht 7 in einer darunter angeordneten Kernschicht 8 sowie einer unter dieser angeordneten weiteren Deckschicht 9. Die beiden Deckschichten 7, 9 bestehen aus dem faserverstärkten Polyurethan, aus dem auch die Sonnenkollektorwanne nach Fig. 1 gefertigt ist. Die Kernschicht 8 wird vorzugsweise durch eine so genannte Wabenplatte gebildet, wobei diese Wabenplatte bspw. aus Papier, Kunststoff oder Metall, z.B. aus Aluminiumwaben, hergestellt sein kann. Diese Wabenplatte bzw. die Kernschicht 8 kann bspw. eine Dicke aufweisen, ausgewählt aus einem Bereich mit einer unteren Grenze von 4 mm und einer oberen Grenze von 10 mm. Es können aber auch dünnere bzw. dickere Wabenplatten verwendet werden. Die Waben selbst können eine beliebige Geometrie aufweisen, bspw. dreieckig, quadratisch, sechseckig, achteckig, etc., sein.

Die beiden Deckschichten 7, 9 können eine Dicke aufweisen, ausgewählt aus einem Bereich mit einer unteren Grenze von 2 mm und einer oberen Grenze von 8 mm, bspw. 4 mm. Ebenso sind hier auch andere Materialstärken verwendbar. Aufgrund des mehrschichtigen Aufbaus mit der Kernschicht 8 werden bei dieser Ausführungsvariante Schichtdicken im Bereich von ca. 1 mm bis 3 mm bevorzugt, wohingegen bei der Ausführungsvariante nach Fig. 1 die Dicke der Sonnenkollektorwanne 2 größer gewählt werden kann, bspw. zwischen 6 mm und 10 mm. Es ist aber im Rahmen der Erfindung aufgrund der Stabilität der Sonnenkollektorwanne 2 auch möglich, bei der Ausführungsvariante der Sonnenkollektorwanne 2 nach Fig. 1 die Schichtdicke auf 1 mm bis 3 mm zu reduzieren.

Fig. 3 zeigt eine Ausführungsvariante der Sonnenkollektorwanne 2 bei der Boden 5 und die Seitenwände 6 wiederum einschichtig aus dem faserverstärkten Polyurethan hergestellt sind, wobei zum Unterschied zur Ausführungsvariante nach Fig. 1 das Polyurethan bei dieser Ausführungsvariante aufgeschäumt ist, also im Kern eine Schaumstruktur 10 aufweist, und die Oberflächen geschlossene, verhautete Schichten 11, 12 bilden. Die Oberflächen dieser Sonnekollektorwanne 2 weisen also keine offenen Poren auf, sodass ein Wassereintritt in diese Schaumstruktur 10 verhindert wird.

Bei sämtlichen Ausführungsvarianten sind in dem Polyurethan der Sonnenkollektorwanne 2 Fasern 13 enthalten, insbesondere in den voran stehend angegebenen Längenabmessungen sowie Gewichtsanteilen. Beispielsweise kann der Faseranteil 10 Gew.-%, 20 Gew.-%, 30 Gew.-%, 40 Gew.-% oder 50 Gew.-% betragen. Des Weiteren können die Fasern 13 eine Länge von bspw. 60 mm, 70 mm, 80 mm oder 90 mm aufweisen. Selbstverständlich besteht im Rahmen der Erfindung die Möglichkeit, Fasern unterschiedlicher Länge zu verwenden, also bspw. zumindest 2 Faserfraktionen, wobei eine dieser Fraktionen eine Faserlänge im Bereich zwischen 50 mm und 60 mm und die andere Faserfraktion eine Länge der Fasern 13 im Bereich zwischen 80 mm und 100 mm aufweisen kann.

Auch bei der Ausführungsvariante nach Fig. 3 besteht die Möglichkeit, wie in Fig. 2 gezeigt, eine Kernschicht 8 in Form einer Wabenplatte anzuordnen, sodass also eine Sonnenkollektorwanne 2 gebildet wird bestehend aus einer zumindest einseitig oberflächlich verhauteten geschäumten Schicht, der Wabenschicht und einer zweiten zumindest einseitig verhauteten geschäumten Schicht. Sowohl durch die Anordnung der Wabenplatte als Kernschicht 8 als auch durch die Ausbildung mit geschäumtem Kern ist eine Gewichtsreduzierung des Sonnenkollektors 1 erzielbar.

Bevorzugt wird die Sonnenkollektorwanne 2 nach dem so genannten LFI-Verfahren (long fibre injection) hergestellt, wie dies im nachstehenden beschrieben ist. Es sind jedoch auch andere Herstellungsverfahren möglich, beispielsweise das Tiefziehen.

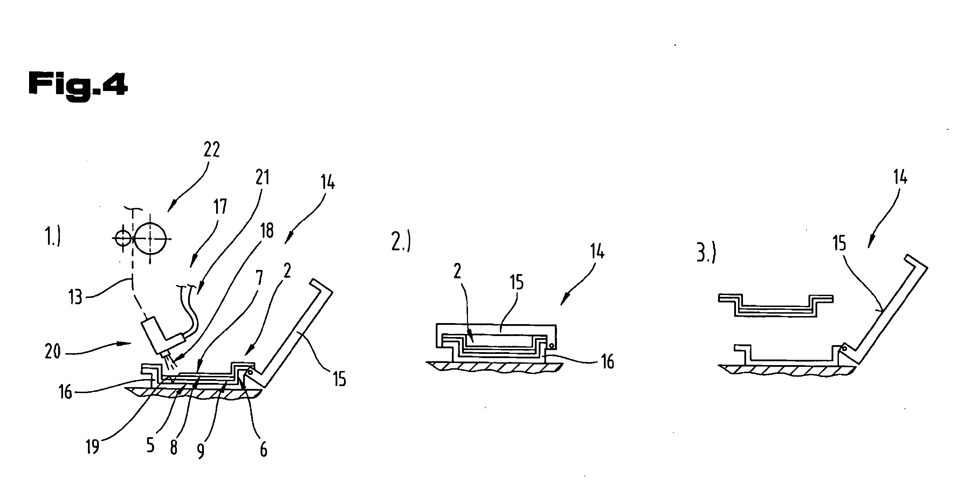

In Fig. 4 ist ein Verfahrensablauf zur Herstellung der Sonnenkollektorwanne 2 dargestellt, wobei das Polyurethan durch einen reaktiven Kunststoff-Rohstoff, welcher über einer Grenztemperatur aufschäumt, gebildet ist. Die Sonnenkollektorwanne 2 ist entsprechend der Ausführungsvariante nach Fig. 2 aufgebaut, mit den beiden Deckschichten 7, 9 aus dem faserverstärkten Polyurethan und der Kernschicht 8 in Form einer Wabenplatte. Die Kernschicht 8 erstreckt sich dabei nur über den Boden 5 der Sonnenkollektorwanne, sodass also die Seitenwände 6 ausschließlich aus dem faserverstärkten Polyurethan gebildet sind. Es wird damit vermieden, dass Wasser in den Bereich der Kernschicht 8 eintreten kann.

Im Rahmen der Erfindung besteht aber auch die Möglichkeit, dass die Kernschicht 8 zumindest teilweise auch in den Seitenwänden 8 angeordnet ist bzw. die gesamte Sonnenkollektorwanne 2 die Kernschicht 8 aufweist.

Bevorzugt werden das faserverstärkte Polyurethan sowie die Kernschicht 8 direkt in ein bereits erhitztes Formwerkzeug 14 zur Fertigung eingebracht. Das Formwerkzeug 14 kann mehrteilig ausgeführt sein, insbesondere aus zumindest einer Oberform 15 und einer Unterform 16 gebildet sein. Nach dem Einbringen der Rohstoffe in das Formwerkzeug 14 wird dieses geschlossen, worauf im wesentlichen durch Temperatur und/oder Druckerhöhung im Formwerkzeug 14 die Verfestigung und Formgebung der Sonnenkollektorwanne 2 erfolgt, sodass diese nach dem abgeschlossenen Formgebungs- bzw. Verfestigungsvorgang im Wesentlichen endgefertigt aus dem Werkzeug entnommen werden kann.

Dazu besteht im Rahmen der Erfindung die Möglichkeit, Metallelemente in das Werkzeug einzulegen und so mit der Sonnenkollektorwanne 2 bereits während der Herstellung zu verbinden, insbesondere im Polyurethan einzubinden. Derartige Metallelemente können z.B. Befestigungselemente für die Befestigung des Sonnenkollektors 1 am Dach sein, und/oder Rahmenelemente, insbesondere Rahmenprofile, die eine äußeren Rahmen des Sonnenkollektors bilden können. Derartige Metallelemente können aber auch für die Befestigung von Anbauteilen an den Sonnenkollektor 1 vorgesehen sein.

Selbstverständlich ist im Rahmen der Erfindung aber auch eine Verfahrensweise möglich, bei der die entformte Sonnenkollektorwanne 2 noch nachbearbeitet wird, beispielsweise durch Stanzen auf die gewünschten Abmessungen.

Wie nun in Fig. 4 schematisch dargestellt, wird in das geöffnete Formwerkzeug 14 durch eine Materialzuführungseinrichtung 17 ein Faser-Polyurethan-Gemisch 18 für die Decksicht 9 auf eine Werkzeugoberfläche 19 eingebracht bzw. aufgesprüht.

Die Decksicht 9 bzw. das Faser- Polyurethan -Gemisch 18 ist anteilsweise aus einem aufschäumbaren Polyurethan gebildet, wobei dieses mit den Fasern 13 zum Faser- Polyurethan - Gemisch 18 vermengt wird, sodass im ausgehärteten bzw. aufgeschäumten Zustand des Faser-Polyurethan -Gemischs 8 dessen Festigkeit gegenüber einer lediglich aus Kunststoff gebildeten Decksichten 9 verbessert ist. Das Polyurethan ist vor dessen Aufschäumen vorzugsweise in flüssigem bzw. zähflüssigem Zustand und wird vorzugsweise durch ein Reaktions-Schaumgemisch, welches temperaturabhängig reagiert bzw. "aushärtet", beispielsweise einem Gemisch aus Polyol oder Polyolen und Isocyanat, gebildet.

Ein Formling wird somit durch direkte Einbringung der einzelnen Komponenten der Sonnenkollektorwanne 2 im Formwerkzeug 14 hergestellt. Als Formling wird die noch nicht verfestigte Sonnenkollektorwanne 2 bezeichnet, die jedoch den grundlegenden Aufbau der einzelnen Schichten, also die Deckschichten 7,9 und die von dieser umgebene Kernschicht 8, bereits aufweist, wobei der Kunststoff-Rohstoff noch nicht ausreagiert ist. Der Formling kann jedoch bereits soweit ausgebildet werden, dass dieser seine wesentliche Kontur bzw. Form aufweist, wie dies an späterer Stelle näher beschrieben wird.

Wie in Fig. 4 im ersten Verfahrensschritt exemplarisch dargestellt, kann die Materialzuführungseinrichtung 17 einen Mischkopf 20 aufweisen, der mit einer Rohstoffzufuhr 21 für das Polyurethan und einer Faserzufuhr 22 derart verbunden ist, dass im Mischkopf 20 das Faser-Polyurthan-Gemisch 18 erzeugt werden kann und dieses in Folge dem Formwerkzeug 14 zugeführt wird. Der Faseranteil im Faser- Polyurethan -Gemisch 18 ist durch die Faserzufuhr 22 steuerbar, wobei die Fasern auf unterschiedliche Längen gebrochen bzw. geschnitten werden können. Die Faserlängen können dabei variieren, insbesondere an die auszubildende Kontur der Sonnenkollektorwanne 2 angepasst sein, beispielsweise abhängig von Absätzen bzw. Vorsprüngen abgelängt sein, wobei für die Fasern 13 im wesentlichen Längen zwischen wenigen Millimetern bis mehrere Hundert Millimeter, beispielsweise zwischen 25 mm und 100 mm, möglich sind. Es können auch Fasern 13 verwendet werden, die granulatartig bzw. schüttgutartig ausgebildet sind. Der Faseranteil im Faser- Polyurethan -Gemisch 18 kann beispielsweise bis zu 50% betragen. Es ist weiters möglich, dass dem Mischkopf 20 mehrere Kunststoffschaum- Komponenten zugeführt werden, die sich im Mischkopf 20 in einer festlegbaren Zusammensetzung zum Rohstoff des Kunststoff-Rohstoffs vermischen und im Mischkopf 20 weiters die Vermengung zum Faser- Polyurethan -Gemisch 18 erfolgt.

Die Fasern 13 sind vorzugsweise aus einem Glaswerkstoff gebildet, da sich die Verwendung eines Glasfaser- Polyurethan -Gemisches in Verbindung mit den vorliegenden Herstellungsverfahren als besonders vorteilhaft erwiesen hat. Selbstverständlich ist es aber auch möglich, dass die Fasern 13 aus anderen Materialien, wie z.B. Kohlenstofffasern, Mineralfasern, z.B. aus Basalt, Aramidfasern, Keramikfasern, z.B. aus Siliziumnitrid, Siliziumcarbid, oxidische, wie bspw. Aluminiumoxid, Steinwollen, etc., gebildet sind. Insbesondere zeichnen sich diese Fasern 13 durch ihre Temperaturbeständigkeit und/oder geringe Wärmeleitfähigkeit aus.

Es ist bevorzugt, dass die Verteilung der Fasern 13 in der Sonnenkollektorwanne 2 im Wesentlichen gleichmäßig erfolgt, um eine Sonnenkollektorwanne 2 mit über deren gesamten Erstreckung gleichmäßigen Festigkeitseigenschaften fertigen zu können. Neben festigkeitssteigernden und schalldämpfenden Verbesserungen wird durch eine im Wesentlichen gleichmäßige Faserverteilung in der Sonnenkollektorwanne 2 erreicht, dass diese serienmäßig mit geringen Festigkeits- bzw. Steifigkeitstoleranzen fertigbar ist.

Wie bereits erwähnt, erfolgt der Aufbau der Sonnenkollektorwanne 2 direkt auf der erhitzten Werkzeugoberfläche 19 des Formwerkzeuges 14, worauf das Schließen der Ober- bzw. Unterform 15, 16 des Formwerkzeuges 14 erfolgt und der Aushärteprozess des Kunststoffschaumes im Formhohlraum bei erhöhter Temperatur beginnt (geschlossenes Werkzeug in Verfahrensschritt 2 dargestellt). Nach erfolgtem Aushärteprozess wird die Sonnenkollektorwanne 2 aus dem Formwerkzeug 14 endgefertigt entformt, wie im dritten Verfahrensschritt dargestellt.

Es können Kunststoff-Rohstoffe mit langen Reaktionszeiten verwendet werden, d.h. dass in der Zeitspanne zwischen erstem Materialauftrag des Faser- Polyurethan -Gemisches 18 auf die Werkzeugoberfläche 19 und Beendigung des Aufbaus der Sonnenkollektorwanne 2 bzw. Schließen des Werkzeuges 2 durch die lange Reaktionszeit ein vollständiges Ausreagieren des Kunststoff-Rohstoffs verhindert wird.

Zur Verkürzung der Taktzeit ist es möglich, den Aufbau des Formlings bei einer Temperatur, die unterhalb einer Reaktionstemperatur zur Verfestigung des Polyurethans durchzuführen. Es können somit ein oder mehrere Materiallagen des Faser-Polyurethan-Gemisches 18 zur zumindest bereichsweisen Umhüllung der Kernschicht 8 aufgetragen werden ohne dass ein Schäum- bzw. Aushärteprozess einsetzt, unabhängig davon, welche Reaktionszeit des Polyurethan besitzt. Bei einem ersten Verfahrensschritt bleibt das Polyurethan unabhängig von dessen Reaktionszeit im schäumfähigen Zustand, da die Umgebungstemperatur unterhalb einer Grenztemperatur liegt, die benötigt wird, um im Polyurethan eine chemische Schäumungsreaktion hervorzurufen.

Bevor das Verpressen bzw. Verfestigen des Formlings im Formwerkzeug 14 durch im Formhohlraum erfolgende thermische Belastungen bzw. Druckbelastung erfolgt, ist also der grundsätzliche Aufbau des Formlings bereits erfolgt. Es weist also der Formling vorzugsweise denselben Schichtaufbau wie die Sonnenkollektorwanne 2 auf, der zumindest aus den Deckschichten 7, 9 und der Kernschicht 9 besteht.

Es sei angemerkt, dass Aufbau- bzw. Aushärteprozess des Formlings grundsätzlich den im Zuge der Fig.4 beschriebenen entsprechen kann, also beispielsweise bevorzugt nach dem LFI (Langfaser Injektions-)- Verfahren bzw. einer Abwandlung eines solchen Verfahrens erfolgen kann, wobei andere für diesen Zweck geeignete Verfahren verwendbar sind.

Es kann der Aufbau des Formlings derart erfolgen, dass auf eine Träger- bzw. Transportschicht eine erste Lage des Faser-Polyurethan-Gemisches 18 aufgebracht bzw. aufgesprüht wird, darauf die Kernschicht 8 aufgebracht bzw. aufgelegt wird, wonach zumindest eine weitere Lage des Faser-Polyurethan-Gemisches 18 auf die Kernschicht 8 aufgetragen wird.

Der Aufbau des Formlings erfolgt zweckmäßigerweise außerhalb des Formwerkzeuges 14, wodurch das Formwerkzeug 14 an den dessen den Formhohlraum begrenzenden Werkzeugoberflächen 19 konstant eine Temperatur aufweisen kann, die zumindest der Grenztemperatur, ab welcher eine Reaktion zur Verfestigung des Polyurethans stattfindet, entspricht. Das Formwerkzeug 14 kann somit dauerhaft zumindest auf Reaktionstemperatur gehalten werden, wodurch nach der Beschickung des Formwerkzeugs 14 mit dem Formling der Ausschäumprozess sofort beginnen kann. Eine weitere Verkürzung der Taktzeiten bei der Massenfertigung von Sonnenkollektorwannen 2 ist somit möglich.

Weiters kann durch diese Verfahrensweise der Aufbau der gesamten Fertigungseinrichtung einfacher und kompakter gestaltet werden, da diese im Bereich des Werkzeughalters, insbesondere des Werkzeugkarussell, keine Materialzuführungseinrichtung 17 aufweisen muss, da der Sandwichaufbau extern zum Formwerkzeug 14 erfolgt.

Die Träger- bzw. Transportschicht ist in einer bevorzugten Ausführung in Art einer Folie ausgebildet.

Weiters besteht die Möglichkeit, dass der grundlegende Form- bzw. Konturgebungsvorgang des Formlings bereits außerhalb des Formwerkzeugs 14 erfolgt und der vorgeformte Formling bereits mit dessen wesentlicher Konturform in das Formwerkzeug 14 eingelegt wird. Das Vorformen des Formlings bei einer Temperatur unterhalb der Reaktionstemperatur bringt den Vorteil mit sich, dass sich durch die erleichterte Verformbarkeit des Formlings aufgrund des im Wesentlichen flüssigen Kunststoff-Rohstoffs sich Kanten und Konturen exakter und einfacher ausbilden lassen, als dies bei gleichzeitiger Konturgebung mit dem Schäumvorgang im Formwerkzeug 14 der Fall wäre. Die endgültige Verfestigung und somit die eigentliche, bleibende Formgebung des Formlings erfolgt jedoch im Formwerkzeug 14. Zu diesem endgültigen Formgebungs- bzw. Verfestigungsvorgang sei angemerkt, dass bei geschlossenem Formwerkzeug 14 die Werkzeugoberflächen 19 an der Ober- bzw. Unterform 15, 16 eine Oberfläche des Formlings bzw. der endgefertigten Sonnenkollektorwanne 2 begrenzen, wobei die chemische Reaktion des Polyurethans durch die Temperatur im Formhohlraum hervorgerufen wird und unter Druck, welcher auch durch die Expansion aufgrund der Ausschäumung des Polyurethans bei erhöhter Temperatur hervorgerufen wird, die exakte Formgebung entsprechend der Kontur der Werkzeugoberfläche 19 erfolgt.

Die Konturbildung des Formlings kann durch Druckverformung, wie z.B. Pressen, was beispielsweise durch eine stempel-matrizenartige Vorrichtung erfolgen kann, oder durch Tiefziehen erfolgen.

Es ist gemäß einer besonders bevorzugten Ausführungsvariante auch möglich, dass lediglich der Schichtaufbau des Formlings außerhalb des Formwerkzeuges 14 erfolgt und die Kontur- bzw. Formbildung des Formlings erst mit dem Verfestigungsvorgang bzw. vor dem Verfestigungsvorgang im Zuge des Schließens des Formwerkzeuges 14 durchgeführt wird.

Zur Ausbildung der Kernschicht 8 sei angemerkt, dass diese z.B. in Art einer Platte aus Vollmaterial gebildet sein kann, diese jedoch auch eine gitter- bzw. lochplattenartige Struktur mit Ausnehmungen, insbesondere als Wabenplatte bzw. stehende Welle, usw. gebildet sein kann. Als Materialien für die Kernschicht 8 können zur Bildung der vorzugsweise wellen- oder wabenartigen Struktur beispielsweise Aluminium, Kunststoffe wie z.B. Polyester, Polyamid, Polycarbonat, oder auch Holzwerkstoffe, Pappe und Papierwerkstoffe verwendet werden.

Neben der Herstellung durch Einbringen der Komponenten in ein offenes Werkzeug besteht auch die Möglichkeit, das Faser-Polyurethan-Gemisch 18 in ein geschlossenes Werkzeug einzubringen, wozu in der Ober- und/oder Unterform 15, 16 zumindest eine Zufuhrvorrichtung vorgesehen sein kann.

Des Weiteren ist es möglich, dass die Sonnenkollektorwanne ohne die Kernschicht 8 hergestellt wird, bzw. dass das Faser-Polyurethan-Gemisch 18 nicht aufgeschäumt sondern lediglich ausgehärtet, also vernetzt wird. Bevorzugt werden diese Varianten ebenfalls nach dem LFI-Verfahren durchgeführt. Zudem kann der Formling auch verpresst und damit das Faser-Polyurethan-Gemisch 18 verdichtet werden. Durch die Verpressung ist es gleichzeitig möglich, dass das Polyurethan zumindest teilweise in die Waben eindringt. In das geringere Ausmaß kann dies auch durch den Schäumdruck bewirkt werden.

Für den Fall der Herstellung einer Schaumstruktur 10 können Poren erzeugt werden, die einen mittleren Durchmesser ausgewählt aus einem Bereich mit einer unteren Grenze von 0,5 mm und einer oberen Grenze von 10 mm aufweisen, wobei der Porendurchmesser über die Menge an zugesetztem Treibmittel, bspw. Wasser, und/oder den Druck geregelt werden kann.

Die Schaumstruktur 10 kann mit offenen und/oder geschlossenen Poren hergestellt werden.

Die Verhautung der Oberfläche(n) der Schaumstruktur 10 kann über die Temperatur und/oder den Druck gesteuert werden, die Schichtdicke dieser Verhautung über die Zeit, in der die Temperatur bzw. der Druck einwirkt.

Bevorzugt ist der Wannenkörper der Sonnenkollektorwanne einstückig hergestellt, sodass keine Schweißnähte oder dgl., mit Ausnahme von ggfs. angeordneten Anschlussstutzen bzw. Anbauten, vorhanden sind.

Als Polyurethan kann ein herkömmliches Polyurethan verwendet werden, das insbesondere bis zumindest annähernd 150 °C langzeittemperaturstabil und bis zumindest annähernd 200 °C kurzeittemperaturstabil ist. Es kann dabei ein Zweikomponentenpolyurethan eingesetzt werden, also das Polyol, beispielsweise puropreg^{®} 561.3, und das Isocyanat, beispielsweise PUR 900 (beide zu beziehen bei der Fa. Rühl Puromer GmbH) getrennt voneinander zugeführt werden, ebenso kann ein Einkomponentenpolyurethan verwendet werden. Die Komponenten des Polyurethans können auch als Prepolymer eingesetzt werden, d.h. das diese bereits eine gewisse Kettenlänge vor dem Einsatz aufweisen können.

Es besteht weiters die Möglichkeit, dass Durchbrüche bzw. Ausnehmungen in der Sonnenkollektorwanne 2 bereits im Formwerkzeug 14 hergestellt werden, wofür im Formwerkzeug 2 entsprechende Stanzmesser oder Stempel linear verfahrbar angeordnet sein können.

Die Zuführung der Fasern 13 kann über eine gesonderte Düse des Mischkopfes 20 erfolgen, wobei die Fasern 13 als Meterware vorliegen können und von einer Rolle abgerollt werden und während der Zuführung auf die gewünschte Länge abgelängt werden. Es entsteht dabei eine innige Durchmischung des Faser-Polyurethan-Gemisches 18.

Die Fasern 13 können geschichtet oder ohne bestimmte Raumorientierung in der Sonnenkollektorwanne 2 vorliegen.

Es besteht weiters die Möglichkeit, die Kernschicht 8, insbesondere die Wabenplatte, bakterienresistent auszurüsten, um die Ansammlung von Bakterien in den Waben bei hoher Luftfeuchtigkeit, die u.U. in Sonnenkollektoren vorherrschen kann, zu vermeiden.

Es ist auch möglich, die Kernschicht 8, insbesondere die Wabenplatte, mit einem Imprägniermittel zur Reduktion der Wasseraufnahme zu versehen.

Weiters besteht die Möglichkeit zwischen der/den Polyurethanschichtlen und der Kernschicht 8 eine Sperrschicht, z.B. ein Sperrvlies, anzuordnen, um damit einerseits das eindringen des Polyurethans in die Kernschicht zu verhindern, falls nicht eine Verbesserung des Schichtverbundes durch dieses Eindringen, wie dies voranstehend beschrieben wurde, gewünscht ist, oder um damit das Eindringen von Fremdstoffen in die Kernschicht besser verhindern zu können.

Falls das Polyurethan aufgeschäumt wird, wird vorzugsweise ein Hartschaum hergestellt.

Der Sonnenkollektor 1 kann als feststehender Sonnenkollektor 1 ausgeführt sein. Aufgrund des geringen Gewichtes eignet sich dieser jedoch auch für mobile Anwendungen, z.B. zur Warmwassererzeugung bei Katastropheneinsätzen.

Die Ausführungsbeispiele zeigen mögliche Ausführungsvarianten der Sonnenkollektorwanne 2, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Sonnenkollektorwanne 2 diese bzw. deren Bestandteile teilweise unmaßstäblich und/oder vergrößert und/oder verkleinert dargestellt wurden.

### Bezugszeichenaufstellung

- 1: Sonnenkollektor
- 2: Sonnenkollektorwanne
- 3: Absorber
- 4: Abdeckung
- 5: Boden

- 6: Seitenwand
- 7: Deckschicht
- 8: Kernschicht
- 9: Deckschicht
- 10: Schaumstruktur

- 11: Schicht
- 12: Schicht
- 13: Faser
- 14: Formwerkzeug
- 15: Oberform

- 16: Unterform
- 17: Materialzuführungseinrichtung
- 18: Faser-Polyurethan-Gemisch
- 19: Werkzeugoberfläche
- 20: Mischkopf

- 21: Rohstoffzufuhr
- 22: Faserzufuhr

## Patentansprüche

1. Sonnenkollektorwanne (2) mit einem Wannenkörper, der einen Boden (5) und daran angeordnete Seitenwände (6) aufweist, wobei der Wannenkörper eine Schicht aus einem mit Fasern (13) verstärkten Kunststoff umfasst, **dadurch gekennzeichnet, dass** der Kunststoff ein Polyurethan ist.

2. Sonnenkollektorwanne (2) nach Anspruch 1, **dadurch gekennzeichnet, dass** zumindest der Boden (6) des Wannenkörpers, vorzugsweise der gesamte Wannenkörper, mehrschichtig ausgebildet ist, wobei zumindest eine Kernschicht (8) durch eine Wabenplatte gebildet ist.

3. Sonnenkollektorwanne (2) nach Anspruch 2, **dadurch gekennzeichnet, dass** die Schicht aus dem faserverstärkte Polyurethan zumindest teilweise in die Waben der Wabenplatte hineinragt.

4. Sonnenkollektorwanne (2) nach einem der Ansprüche 1 bis 3, **dadurch gekennzeichnet, dass** die Fasern (13) ausgewählt sind aus einer Gruppe umfassend Glasfasern, Mineralfasern, Kohlenstofffasern, Aramidfasern und Keramikfasern.

5. Sonnenkollektorwanne (2) nach Anspruch 4, **dadurch gekennzeichnet, dass** die Fasern (13) eine Länge aufweisen, ausgewählt aus einem Bereich mit einer unteren Grenze von 25 mm und einer oberen Grenze von 100 mm.

6. Sonnenkollektorwanne (2) nach einem der Ansprüche 1 bis 5, **dadurch gekennzeichnet, dass** der Anteil der Fasern (13) an der Schicht ausgewählt ist aus einem Bereich mit einer unteren Grenze von 3 Gew.-% und einer oberen Grenze von 60 Gew.-%.

7. Sonnenkollektor (1) mit einer Sonnenkollektorwanne (2), zumindest einem darin angeordneten Absorber (3), sowie mit einer transparenten Abdeckung (4) der Sonnenkollektorwanne (2), **dadurch gekennzeichnet, dass** die Sonnenkollektorwanne (2) nach einem der vorhergehenden Ansprüche gebildet ist.
